# EUROPÄISCHE PATENTSCHRIFT

(11) **EP 2 994 366 B1**
(45) Veröffentlichungstag und Bekanntmachung des Hinweises auf die Patenterteilung: **01.02.2017**
(21) Anmeldenummer: 14720483.8
(22) Anmeldetag: 12.04.2014
(51) Int. Cl.: B62D 21/15, B60R 19/34

(54) **VORRICHTUNG ZUM ERZEUGEN EINES IMPULSES AUF EIN FAHRZEUG IN EINER FAHRZEUGQUERRICHTUNG**
DEVICE FOR GENERATING AN IMPULSE ACTING ON A VEHICLE IN A LATERAL DIRECTION OF THE VEHICLE
DISPOSITIF POUR PRODUIRE UNE IMPULSION SUR UN VÉHICULE DANS UNE DIRECTION TRANSVERSALE DE VÉHICULE

(30) Priorität: 10.05.2013 DE 102013007981
(43) Veröffentlichungstag der Anmeldung: 16.03.2016
(73) Patentinhaber: Audi AG, 85045 Ingolstadt (DE)
(72) Erfinder: KRAMER, Tobias, 85134 Stammham (DE); RUGIES, Stefan, 85055 Ingolstadt (DE); BARTL, Florian, 86673 Bergheim (DE)
(74) Vertreter: Reichert, Thomas Klaus
(86) Internationale Anmeldenummer: PCT/EP2014/000980
(87) Internationale Veröffentlichungsnummer: WO 2014/180528

(56) Entgegenhaltungen:
- DE-A1- 4 313 785
- DE-A1- 10 113 098
- DE-A1-102007 023 392
- JP-U- H0 629 920
- US-A1- 2012 248 820

## Beschreibung

Die Erfindung betrifft eine Vorrichtung zum Erzeugen eines Impulses auf ein Fahrzeug in einer Fahrzeugquerrichtung, resultierend aus frei werdender Energie beim Aufprall des Fahrzeuges auf ein Hindernis nach dem Oberbegriff des Anspruchs 1.

Zur Erhöhung der Sicherheit moderner Kraftfahrzeuge werden seitens der Automobilhersteller große Anstrengungen unternommen, immer anspruchsvollere Kriterien von sogenannten Crashtests, insbesondere von sogenannten Offset-Crashtests zu erfüllen. Hierbei ist ein Trend dahingehend erkennbar, dass die Überlappung beim Aufprall zwischen Hindernis und Fahrzeug immer geringer wird, so dass üblicherweise vorhandene Längsträgerstrukturen einer Fahrzeugkarosserie bei aktuell geforderten Überdeckungen von lediglich 25 % gemessen von der dem Hindernis zugewandten Fahrzeugaußenseite ohne Seitenspiegel gar nicht mehr an der Kollision direkt beteiligt sind und somit als Auffangelement für die Aufprallenergie nicht mehr so wirkungsvoll sind. Aktuell bildet der sogenannte "small overlap-Test" des US-amerikanischen Instituts für Unfallforschung IIHS einen solchen Lastfall.

Vor allem bei Fahrzeugen mit längseingebautem Motor/Antriebsaggregat besteht bei diesem Crashtest die Gefahr des sogenannten "Verhakens", "Einhakens" öder "Verblockens". Das Verhaken, Einhaken oder Verblocken tritt deswegen auf, weil zur Bereitstellung ausreichender Radhausgrößen die Längsträger einer Fahrzeugkarosserie nicht beliebig weit nach außen verlegt werden können. Im Bereich z. B. vor einem Vorderrad außerhalb des Längsträgers (vordere, rechte oder linke "Fahrzeugecke") kann somit bei einem Crashtest mit geringer Überdeckung die durch den Aufprall freigesetzte Energie nicht auf direktem Wege in die hierfür vorgesehenen absorbierenden Energie Strukturen, z. B. die Fahrzeuglängsträger erfolgen. Ein solches Fahrzeug bewegt sich bei einem solchen Crashtest nach dem Aufprall fast unverändert frontal auf das Hindernis zu, wodurch das vordere, dem Hindernis zugewandte Rad frontal auf die Barriere trifft und durch den Aufprall unbeabsichtigter Weise in die Fahrgastzelle geschoben wird. Die Radaufhängungen und das Rad selbst sind dabei nicht geeignet, die hierbei freiwerdenden Aufprallenergien zu absorbieren.

Aus der WO 2012/110529 ist es bekannt, mittels Kragträgern und Abstützstrukturen Teile der Aufprallenergie in Längsträger einer Karosserie einzuleiten.

Aus der DE 10 2004 036 322 A1 ist es bekannt, Abweiserstrukturen vorzusehen, an denen das Fahrzeug im Falle eines Aufpralls mit nur sehr geringer Überdeckung abgleiten soll, so dass das Fahrzeug einen seitlichen Versatz erfährt und ein Verhaken verhindert werden soll.

Aus der EP 201 53 72 ist es bekannt, auftretende Kräfte bei einem Aufprall mit geringer Überdeckung mittels eines Trägers oberhalb des Rades in die A-Säule einer Fahrzeugkarosserie einzuleiten.

Aus der US 8152224 ist es bekannt, zusätzlich zu im Fahrzeug weiter unten liegenden Längsträgern oben liegende Längsträger vorzusehen, die eine abweisende Kontur aufweisen, um so eine Ablenkung bzw. einen seitlichen Versatz des Fahrzeuges sicherzustellen.

Aus der gattungsbildenden US 2012/0248820 A1 ist es bekannt, mittels einer Deformationsstrebe einen Längsträger im Aufprallfall gezielt zur Fahrzeugmitte hin zu deformieren und den deformierten Längsträgerabschnitt möglichst mit dem Antriebsaggregat in Kontakt zu bringen, um so die Aufprallenergie ins Antriebsaggregat einzuleiten.

Aufgabe der Erfindung ist es, eine Vorrichtung zum Erzeugen eines Impulses auf ein Fahrzeug in einer Fahrzeugvorrichtung mit einem erhöhten Funktionsumfang anzugeben.

Diese Aufgabe wird mit einer Vorrichtung mit den Merkmalen des Anspruchs 1 gelöst. Vorteilhafte Ausführungsformen sind in den Unteransprüchen angegeben.

Die Erfindungsidee baut auf dem Gedanken auf, dass der Impuls in Fahrzeugquerrichtung möglichst direkt in den Schwerpunkt des Aggregates eingeleitet werden soll, ehe es zum Einhaken kommt. Durch die Bewegung des Aggregates wird dann auch das gesamte Fahrzeug in Querrichtung, also vom Hindernis weg ausgelenkt, da es seinen Bewegungsimpuls über die konventionelle Aggregatelagerung oder/und durch den Kontakt mit Karosseriestrukturen auf der Hindernis abgewandten Seite auf die Zelle überträgt. Mit der Erfindung kann dies umgesetzt werden, so dass das Fahrzeug sich beim Aufprall nicht mehr direkt auf die Barriere zubewegt sondern zumindest teilweise von dieser weggeleitet wird, wodurch das Einhaken weniger wahrscheinlich oder zumindest hinsichtlich des Grades des Einhakens vermindert ist. Erfindungsgemäß werden also gezielt Fahrzeugkarosseriestrukturen, die eigentlich gar nicht am Aufprall beteiligt sind, d. h. im Bereich des Aufpralls liegen, zur Energieabsorption herangezogen.

Dies gelingt mit einer Vorrichtung mit den Merkmalen des Anspruchs 1, wobei ein in Fahrzeugquerrichtung y druckstreif ausgebildeter Träger, der sich im Wesentlichen in Fahrzeugquerrichtung erstreckt, vorhanden ist. "Im Wesentlichen in Fahrzeugquerrichtung" bedeutet dabei, dass der Träger nicht unbedingt geometrisch exakt in Fahrzeugquerrichtung verlaufen muss, sondern vielmehr, dass dessen Haupterstreckung sich zumindest größtenteils in Fahrzeugquerrichtung erstreckt.

Die Vorrichtung weist weiterhin eine Lagerungseinrichtung zur Befestigung des Trägers am Fahrzeug auf. Die Befestigung kann dabei bevorzugt an einem Hilfsrahmen (Aggregateträger) erfolgen. Eine Befestigung/Festlegung des Trägers an Karosseriestrukturen, wie z. B. Längsträgern ist aber ebenfalls möglich. Die Vorrichtung weist weiterhin zumindest eine Betätigungseinrichtung zur Verlagerung des Trägers im Unfallfall in im Wesentlichen Fahrzeugquerrichtung (y-Richtung) auf. Die Betätigungseinrichtung stellt sicher, dass während des Aufpralls der Träger durch auftretende Kräfte in Fahrzeugquerrichtung verlagert wird.

Des Weiteren besitzt die Vorrichtung eine Kopplungseinrichtung, welche zumindest im Falle der Verlagerung des Trägers in Fahrzeugquerrichtung (Y-Richtung) mit einem Antriebsaggregat oder einem sonstigen Aggregat des Fahrzeuges zusammenwirkt oder in Wirkverbindung gebracht wird und das Antriebsaggregat oder das sonstige Aggregat zumindest im Bereich der Kopplung in Fahrzeugquerrichtung relativ zur Karosserie des Fahrzeuges auslenkt.

Erfindungsgemäß stützt die Kopplungseinrichtung im Normalbetrieb des Fahrzeugs das Aggregat in Z-Richtung ab, wobei der Träger so als Drehmomentquerträger zur Abstützung von Momenten zur Querachse (y-Achse) fungiert.

Unter "Aggregat/Antriebsaggregat" im Sinne der Erfindung ist jede schwere, insbesondere blockartige Struktur eines Fahrzeuges zu verstehen, die aufgrund ihrer Masse geeignet ist, bei Einleitung eines Impulses das gesamte Fahrzeug nicht nur unwesentlich zu verlagern. Beispielsweise können solche Aggregate auch Getriebeeinheiten, Elektromotoren, Batterien oder dergleichen sein.

Bei der Erfindung ist von besonderem Vorteil, dass durch die Auslenkung eines relativ schweren blockartigen Aggregates des Fahrzeuges es möglich ist, dem Fahrzeug einen wirksamen seitlichen Versatz aufzuzwingen, so dass das Fahrzeug bevor das Hindernis, das in Aufprallrichtung hinter der Vorrichtung liegende Rad erreicht eine Auslenkung, erhält.

Mit der Erfindung gelingt es somit, beim Frontalaufprall, insbesondere beim offset-Frontalaufprall eine Schadenminimierung am Fahrzeug zu erreichen. Die vorgeschlagene Vorrichtung zeichnet sich durch geringe Herstellkosten aus und ist - wie weiter unten beschrieben - geeignet, im Rahmen einer Funktionsintegration im Unfallfall als sogenannter Impulsquerträger zum Einleiten eines Impulses in das Aggregat und im Normalbetrieb des Fahrzeuges als Drehmomentquerträger zu wirken.

Bei einer bevorzugten Ausgestaltung der Erfindung ist die Lagerungseinrichtung um eine Fahrzeughochachse (z-Achse) scharnierend ausgebildet oder um die Fahrzeughochachse (z-Achse) verformungsweicher als um die übrigen Fahrzeugachsen (x-Achse oder y-Achse) ausgestaltet. Hierdurch gelingt insbesondere ein leichtes Auslenken im Unfallfall, wodurch eine definierte Verlagerung des Trägers in Fahrzeugquerrichtung leichter erzielbar ist.

Gemäß einer weiteren bevorzugten Ausführungsform ist die Lagerungseinrichtung als Gelenkeinrichtung oder als Deformationsteil oder als Deformationsbaugruppe ausgebildet.

Es bietet sich gegebenenfalls an, die Kopplungseinrichtung mit dem Antriebsaggregat im Bereich einer Raumachse (x-Achse, y-Achse oder z-Achse) durch einen Aggregateschwerpunkt zusammenwirken zu lassen, wobei durch die Impulseinleitung in hohem Maße eine translatorische Verschiebung des Aggregates relativ zum Fahrzeug erreicht werden kann. Es werden hierdurch Kippmomente vermieden, die den erreichbaren Versatz des Fahrzeuges in Fahrzeugquerrichtung mindern könnten.

Zur Erreichung einer Funktionsintegration ist das Aggregat erfindungsgemäß mittels der Kopplungseinrichtung und gegebenenfalls dem Träger in z-Richtung abgestützt , so dass der Träger als Drehmomentquerträger zur Abstützung von Momenten um die Fahrzeugquerachse fungiert.

Die Betätigungseinrichtung der Vorrichtung ist zweckmäßiger Weise in Fahrzeugquerrichtung gesehen zumindest teilweise außerhalb eines Fahrzeuglängsträgers angeordnet und reicht zumindest derart weit nach außen, dass im Kollisionsfall mittels der Betätigungseinrichtung eine Verlagerung des Trägers in Fahrzeugquerrichtung (y-Richtung) sicher bewirkbar ist.

In Aufprallrichtung gesehen, ist es dabei zweckmäßig, dass die Betätigungseinrichtungen oder sofern diese einstückig mit dem Träger ausgebildet sind, der Träger in Aufprallrichtung weiter hinten angeordnete Räder zumindest teilweise überdeckt. Der Träger zusammen mit den Betätigungseinrichtungen ist dabei zweckmäßiger Weise in Aufprallrichtung soweit vor einem Rad, welches zum Verhaken neigt, angeordnet, dass bevor das Hindernis auf das Rad trifft, bereits eine Auslenkung des Aggregates relativ zur Karosserie und somit eine Impulsübertragung auf das gesamte Fahrzeug und eine seitliche Verlagerung des Fahrzeuges vom Hindernis weg stattgefunden hat.

Die erfindungsgemäße Vorrichtung ist geeignet, sowohl im Bereich einer Fahrzeugfront als auch eines Fahrzeughecks angeordnet zu werden.

Weitere vorteilhafte Ausgestaltungsmerkmale finden sich in den Unteransprüchen oder den nachfolgenden detaillierten Figurenbeschreibung.

Nachfolgend wird die Erfindung anhand der Zeichnung beispielhaft näher erläutert. Es zeigen:
- Figur 1:: schematisch eine Draufsicht auf ein Fahrzeug gemäß dem Stand der Technik vor einem Aufprall auf ein versetzt zum Fahrzeug angeordnetes Hindernis;
- Figur 2:: die Situation gemäß Figur 1 nach dem Aufprall, wobei das Hindernis das Vorderrad des Fahrzeuges bereits verschoben hat;
- Figur 3:: den Aufprall eines Fahrzeuges auf ein versetzt angeordnetes Hindernis, wobei das Fahrzeug die erfindungsgemäße Vorrichtung aufweist;
- Figur 4:: die Situation gemäß Figur 3 nach der Kollision, wobei das Fahrzeug aufweisend die Erfindung einen seitlichen Versatz vollzogen hat;
- Figur 5:: stark schematisiert die erfindungsgemäße Vorrichtung in einer perspektivischen Ansicht auf einen Teilbereich einer Karosseriestruktur;
- Figur 6:: die erfindungsgemäße Vorrichtung gemäß Figur 5 in einer Frontalansicht mit schematisch dargestelltem Aggregat;
- Figur 7:: eine vergrößerte Ansicht auf die erfindungsgemäße Vorrichtung mit schematisch dargestellten Verlagerungseinrichtungen;
- Figur 8:: schematisch eine Unteransicht auf ein Fahrzeug aufweisend die erfindungsgemäße Vorrichtung
- Figur 9:: eine Ausführungsform einer Lagerungseinrichtung in schematischer Ansicht;

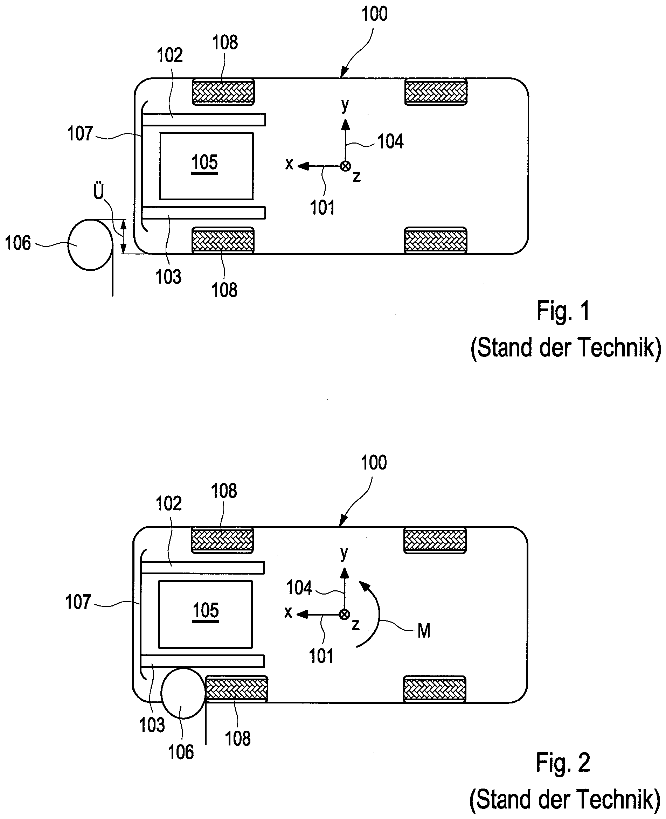

Einleitend soll anhand der Figuren 1 und 2 der Unfallfall bei einem Fahrzeug gemäß dem Stand der Technik erläutert werden. Ein Fahrzeug 100 weist in Fahrtrichtung 101 zwei Längsträger 102 und 103 auf. Zwischen den Längsträgern 102 und 103 ist in Fahrzeugquerrichtung 104 gesehen, beispielsweise ein Antriebsaggregat 105 angeordnet. Das Fahrzeug 100 bewegt sich in Fahrtrichtung 101 auf ein Hindernis 106 zu, welches beispielsweise eine Überdeckung Ü in Höhe von lediglich 25 % aufweist. Das Fahrzeug weist weiterhin üblicherweise einen Stoßfängerquerträger 107 auf.

Im Unfallfall (vgl. Figur 2) trifft das Hindernis 106 bei einem Fahrzeug 100 gemäß dem Stand der Technik nicht oder nur in unwesentlichem Maße auf die Längsträger 102, 103, welche üblicherweise die wesentlichen Elemente zum Energieabbau einer Aufprallenergie im Unfallfall darstellen. Das Hindernis 106 gelangt mit einem Vorderrad 108 in Kontakt, wobei dieses nahezu ungehindert in die Fahrzeugkarosserie "eindringt". Das Vorderrad 108 ist dabei nicht in der Lage, in ausreichendem Maße Energie zu absorbieren und wird üblicherweise ein Radhaus des Fahrzeugs 100 deformierend relativ weit in den Fahrzeuginnenraum eingedrückt. Hierdurch entsteht das sogenannte Verhaken des Fahrzeuges am stark versetzt angeordneten Hindernis. Durch den Aufprall erfährt das Fahrzeug üblicherweise ein Drehmoment M in dargestellter Pfeilrichtung gemäß Figur 2, wodurch das Verhaken noch verstärkt wird.

Dem gegenüber wird bei einem Fahrzeug 1, welches mit einer erfindungsgemäßen Vorrichtung 2 zum Erzeugen eines Impulses auf das Fahrzeug 1 in Fahrzeugquerrichtung y ausgestattet ist, der Unfallverlauf wie überblicksartig nachfolgend dargestellt positiv beeinflusst. Beim Aufprall des Fahrzeugs 1 auf das Hindernis 106 gelangt das Hindernis 106 mit der Vorrichtung 2 in Kontakt (Kontaktstelle K). Somit erfährt die Vorrichtung 2 relativ zum Fahrzeug 1 einen Versatz in vorwiegend Fahrzeugquerrichtung (y-Richtung). Die Vorrichtung 2 gelangt dabei über die Koppelstelle 15 in Wirkverbindung mit dem Antriebsaggregat 105, wodurch das Antriebsaggregat 105 in Fahrzeugquerrichtung 104 (y-Richtung) ein Stück mitgenommen wird. Das Aggregat 105 gelangt dabei auf der der Unfallseite (Aufprallstelle K) gegenüberliegenden Seite mit einem relativ steifen Bereich der Karosserie in Kontakt, wodurch die Aufprallenergie über die Vorrichtung 2 und das Aggregat 102 in massive und sehr tragfähige Karosseriestrukturen, wie z. B. den Längsträger 102 eingetragen wird. Hierdurch gelingt es, zumindest einen Teil der Aufprallenergie derart umzuleiten, dass das Fahrzeug 1 in seinem Frontbereich oder allgemeiner gesagt, im Kollisionsbereich einen Impuls in Fahrzeugquerrichtung erfährt, wodurch das Fahrzeug 1 über eine Strecke S - zumindest im Frontbereich des Fahrzeuges 1 - vom Hindernis 106 wegbewegt wird. Dieser Versatz des Fahrzeuges 1 bewirkt, dass die Tendenz des Verhakens minimiert wird und zudem gegebenenfalls ein Abgleiten des Vorderrades 108 des Fahrzeuges 1 am Hindernis 106 begünstigt wird. Hierdurch lassen sich bei einer derartigen Unfallsituation mit nur geringer Überdeckung die Schäden am Fahrzeug 1 deutlich minimieren und die Belastung auf die Fahrgastzelle ebenfalls reduzieren.

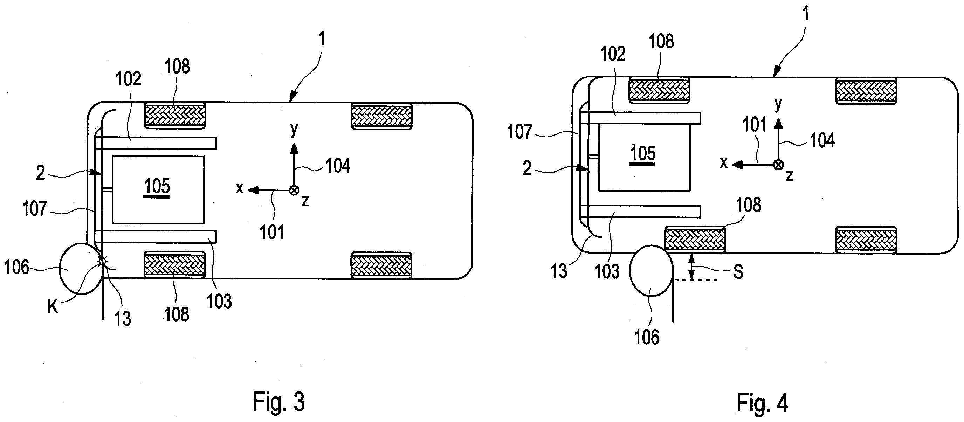

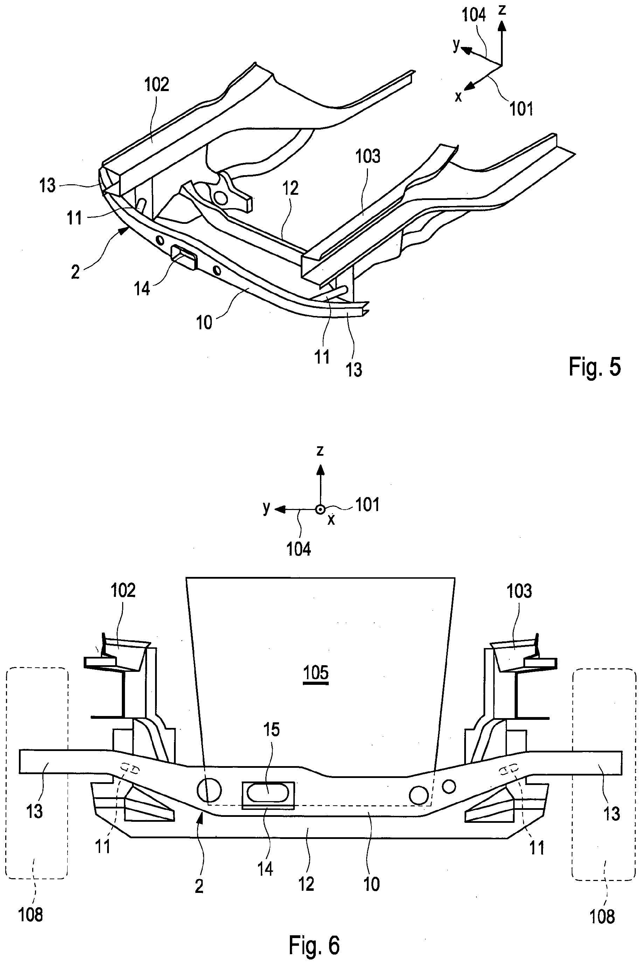

Um diesen Effekt, wie er anhand der Figuren 3 und 4 erläutert wurde, zu erreichen, besitzt eine erfindungsgemäße Vorrichtung 2 - die nachfolgend anhand der Figuren 5 bis 7 erläutert werden wird - zumindest einen sich im Wesentlichen in Fahrzeugquerrichtung y erstreckenden drucksteif ausgebildeten Träger 10. Der Träger 10 ist mittels Lagerungseinrichtungen 11 in einer Ruhelage, beispielsweise an einem Hilfsrahmen 12 des Fahrzeugs 1, befestigt.

Die erfindungsgemäße Vorrichtung 2 weist zudem eine Betätigungseinrichtung 13 auf, welche zur Verlagerung des Trägers 10 im Unfallfall im Wesentlichen im Fahrzeugquerrichtung (y) dient. Die Betätigungseinrichtung 13 (vgl. auch Figur 3) ragt im Normalzustand (d. h. vor dem Unfallfall) in Fahrzeugquerrichtung gesehen in den zu erwartenden Kontaktbereich mit dem Hindernis 106 hinein. Sie ist zudem in Fahrtrichtung 101 möglichst weit vor dem zur Verhakung neigenden Fahrzeugteil, z. B. dem Vorderrad 108 angeordnet. Hierdurch ist sichergestellt, dass die erfindungsgemäße Vorrichtung 2 im Unfallfall mit dem Hindernis 106 sicher in Kontakt gerät. Weiterhin ist die Betätigungseinrichtung 13 gemäß der dargestellten Ausführungsform nach Art einer Gleitschiene oder Abgleitwange ausgebildet, die gegenüber dem Träger 10 derart in Fahrzeuglängsrichtung nach hinten geneigt angeordnet ist, dass möglichst ein Abgleiten des Hindernisses 106 auf einer den Hindernis 106 zugewandten Frontseite der Betätigungseinrichtung 13 möglich ist. Die Betätigungseinrichtung 13 ist dabei möglichst starr mit dem Träger 10 verbunden, sodass im Unfallfall, das heißt im Kontaktfall der Betätigungseinrichtung 13 mit dem Hindernis 106 der Träger 10 in Fahrzeugquerrichtung verlagert, das heißt betätigt werden kann.

Weiterhin weist die erfindungsgemäße Vorrichtung 2 eine Kopplungseinrichtung 14 auf, welche zumindest im Falle der Verlagerung des Trägers 10 in Fahrzeugquerrichtung (y) mit dem Aggregat 105 (schematisch dargestellt in Figur 6) zusammenwirkt oder in Wirkverbindung tritt. Die Kopplungseinrichtung 14 besteht dabei beispielsweise aus einer tassenartigen Ausnehmung im Träger 1.0, in die ein Pin oder ein andersartiger Vorsprung 15 eingreift. Bevorzugt ist dabei in Fahrzeugquerrichtung y, zwischen dem Vorsprung 15 und der Kopplungseinrichtung 14 im Normalzustand etwas Spiel vorgesehen, um Aggregatebewegungen in Fahrzeugquerrichtung y nicht unbeabsichtigter Weise auf die erfindungsgemäße Vorrichtung 2 zu übertragen.

Im Unfallfall gelangt die Kopplungseinrichtung 14 mit dem Vorsprung 15 in formschlüssigen Kontakt (d. h. in formschlüssiger Wirkverbindung) und lenkt das Aggregat 105 in Fahrzeugquerrichtung y ein Stück aus. Dabei wird das Aggregat 105 im Unfallfall beispielsweise auf einen der Längsträger 102 zubewegt, bis das Aggregat 105 mit diesem Längsträger 102 oder einer vergleichbaren Karosseriestruktur in Kontakt gelangt.

Hierdurch wird der Impuls, der über die erfindungsgemäße Vorrichtung 2 auf das Aggregat 105 übertragen wurde, großflächig auf eine zur Energieaufnahme speziell ausgebildete Karosseriestruktur, wie z. B. den Längsträger 102 übertragen. Das relativ schwere Aggregat 105 gibt diesen Impuls an die Fahrzeugkarosserie weiter, wodurch ein seitlicher Versatz des Fahrzeuges 1 erreicht wird. Hierdurch wird die Neigung des Fahrzeuges 1 zum Verhaken vermindert.

Dies gelingt, da der bei der Kollision entstehende Impuls in Fahrzeugquerrichtung in den Schwerpunkt des Aggregates 105 bzw. in das Aggregat 105 eingeleitet wird, ehe es zum Einhaken, Verhaken kommt. Die Impulsübertragung vom Aggregat 105 auf die steiferen Karosseriestrukturen erfolgt dabei bevorzugt bereits zu einem Zeitpunkt, bevor das Hindernis mit dem Vorderrad kollidiert, so dass der Fahrzeugversatz vom Hindernis weg möglichst früh einsetzt. Durch diese Maßnahme hat beispielsweise das Fahrzeug genug Zeit, sich seitlich vom Hindernis wegzubewegen und somit die Verhakungswahrscheinlichkeit zu verringern.

Die Betätigungseinrichtung 13 ragt dabei in Fahrzeugquerrichtung gesehen über die Längsträger 102, 103 seitlich hinaus und überdeckt das Vorderrad / die Vorderräder 108 zumindest teilweise. Die Lagerungseinrichtung 11 ist dabei vorzugsweise für Kräfte, die in Fahrzeugquerrichtung auf den Träger 10 wirken, verformungsweich oder scharnierend ausgebildet, so dass eine Verlagerung des Trägers 10 in Fahrzeugquerrichtung y nur relativ geringe Kräfte erfordert. Für Kräfte, die in Fahrzeughochrichtung (z-Richtung) auf den Träger wirken, ist die Lagerungseinrichtung 11 bevorzugt steif ausgebildet. Dies ermöglicht es, den Träger 10 der erfindungsgemäßen Vorrichtung 2 im Normalfall (d. h. im Nichtunfallfall) als Drehmomentquerträger zur Aufnahme von Aggregatekräften in z-Richtung zu benutzen.

Bei einer weiteren Ausführungsform der erfindungsgemäßen Vorrichtung 2 ist der Träger 10 mittels Streben 16 am Hilfsrahmen 12 befestigt. Die Befestigung am Hilfsrahmen 12 kann starr oder gelenkig, insbesondere um die Fahrzeughochachse (z-Achse) gelenkig ausgebildet sein. Im Übergangsbereich zwischen dem Träger 10 und der Betätigungseinrichtung 13 ist die Vorrichtung 2 bevorzugt mittels einer Strebe 17 oder einem Knotenblech 18 ausgesteift, sodass ein Abknicken des außerhalb der Längsträger 102 freikragenden Bereichs der Vorrichtung 2 (insbesondere betrifft dies die Betätigungseinrichtungen 13) möglichst verhindert ist. Ziel ist es, die Vorrichtung 2, insbesondere den Träger 10 und die Betätigungseinrichtung 13 möglichst steif auszubilden, damit im Unfallfall der Träger 10 zuverlässig in Fahrzeugquerrichtung (y-Richtung) verlagert wird, wenn das Fahrzeug auf das Hindernis 106 aufprallt bzw. die Vorrichtung 2 mit dem Hindernis 106 in Kontakt gerät.

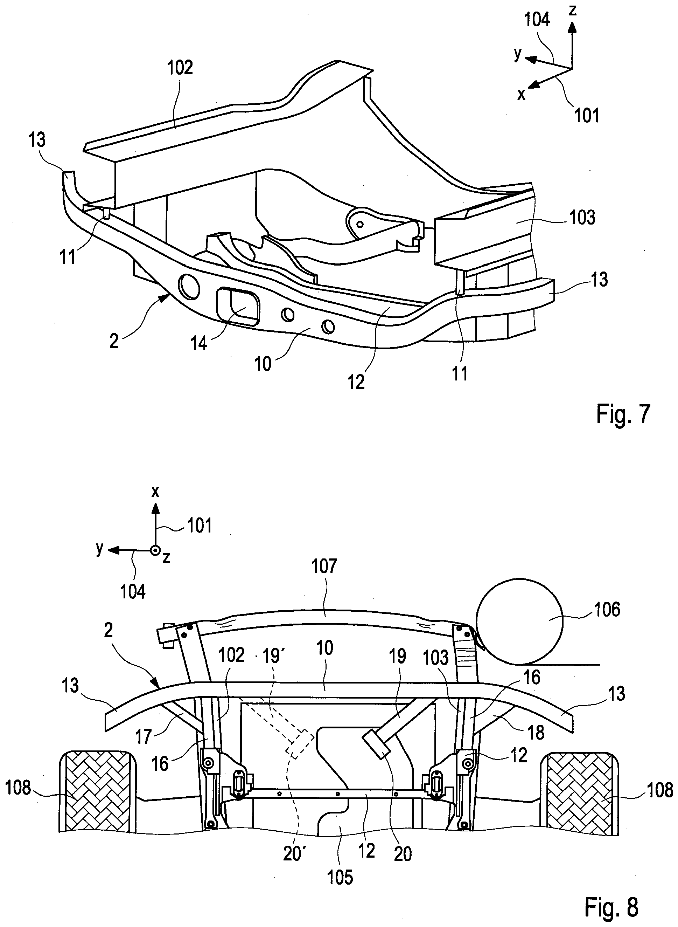

Bei der Ausführungsform gemäß Figur 8 wird der so vom Hindernis 106 auf die Vorrichtung 2 übertragene Impuls mittels einer Stütze 19 und einer geeigneten Krafteinleitungseinrichtung 20 in das Aggregat, insbesondere das Antriebsaggregat 105 eingeleitet. Dabei kann die Stütze 19, wie in Figur 8 mit durchgezogenen Linien dargestellt sowohl als Zug- und Druckstrebe ausgebildet sein um Kräfte in beiden Richtungen auf das Aggregat 105 übertragen zu können. Gleichwohl können beispielsweise auch zwei Stützen 19, 19' (19' in Figur 8 gestrichelt gezeichnet) vorhanden sein, wobei die Stütze 19' über eine korrespondierend ausgebildete Krafteinleitungseinrichtung 20' die entstehenden Kräfte in das Aggregat 105 einleitet. In einem solchen Fall können die Stützen 19, 19' lediglich als Druckstützen ausgebildet sein, um mittels des Trägers 10 Kräfte in beiden Richtungen (das heißt in beiden Fahrzeugquerrichtungen) auf das Aggregat 105 übertragen können.

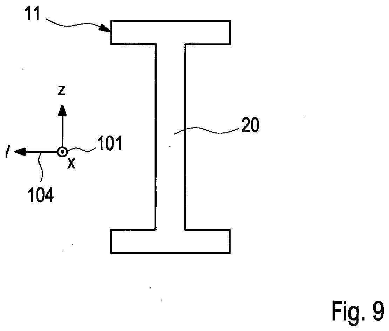

Zur Ausgestaltung einer vorbeschriebenen Lagerungseinrichtung 11 (Fig. 9) bietet sich beispielsweise ein im Querschnitt i-förmiger Träger an, welcher bevorzugt derart angeordnet ist, dass ein den i-förmigen Träger ausbildender Mittelsteg 20 entlang der Fahrzeughochrichtung (z-Achse) ausgerichtet ist, um eine hohe Steifigkeit der Lagerungseinrichtung 11 für Kräfte in z-Richtung zu erreichen, jedoch nur eine geringe Steifigkeit oder eine relativ geringere Steifigkeit für Kräfte in y-Richtung aufweist.

### Bezugszeichenliste

- 100: Fahrzeug
- 101: Fahrtrichtung
- 102/103: Längsträger
- 104: Fahrzeugrichtung
- 105: Antriebsaggregat
- 106: Hindernis
- 107: Stoßfangquerträger
- 108: Vorderrad

- Ü: Überdeckung
- S: Strecke
- K: Kontaktstelle

- 1: Fahrzeug
- 2: Vorrichtung
- y, z: Fahrzeugrichtungen
- 10: Träger
- 11: Lagerungseinrichtung
- 12: Hilfsrahmen
- 13: Betätigungseinrichtung
- 14: Kopplungseinrichtung
- 15: Vorsprung
- 16: Streben
- 17: Strebe
- 18: Knotenblech
- 19, 19': Stütze
- 20, 20': Krafteinleitungseinrichtung

## Patentansprüche

1. Vorrichtung zum Erzeugen eines Impulses auf ein Fahrzeug (1) in einer Fahrzeugquerrichtung (y) resultierend aus freiwerdender Energie bei einem versetzten Aufprall des Fahrzeugs (1) auf ein Hindernis (106), aufweisend:
- zumindest einen sich in Fahrzeugquerrichtung (y) erstreckenden, drucksteif ausgebildeten Träger (10),
- zumindest einer Lagerungseinrichtung (11) zur Befestigung des Trägers (10) in einer Ruhelage an einem Hilfsrahmen (12) oder einer Karosseriestruktur des Fahrzeuges (1),
- zumindest einer Betätigungseinrichtung (13) zur Verlagerung des Trägers (10) im Unfallfall im Wesentlichen in Fahrzeugquerrichtung (y) und
- zumindest einer Kopplungseinrichtung (14, 15), welche zumindest im Falle der Verlagerung des Trägers (10) in Fahrzeugquerrichtung (y) mit einem Aggregat (105) zusammenwirkt oder in Wirkverbindung tritt und das Aggregat (105) zumindest im Bereich der Wirkverbindung in Fahrzeugquerrichtung (y) relativ zur Karosserie des Fahrzeuges auslenkt, **dadurch gekennzeichnet, dass** die Kopplungseinrichtung (14, 15) im Normalbetrieb des Fahrzeugs (1) das Aggregat (105) in z-Richtung abstützt und der Träger (10) so als Drehmomentquerträger zur Abstützung von Momenten um die Fahrzeugquerachse (y-Achse) fungiert.

2. Vorrichtung nach Anspruch 1, **dadurch gekennzeichnet, dass** die Lagerungseinrichtung (11) um eine Fahrzeughochachse (z-Achse) scharnierend ausgebildet ist oder um die Fahrzeughochachse (z-Achse) verformungsweicher als um die übrigen Fahrzeugachsen (x-Achse, y-Achse) ausgebildet ist.

3. Vorrichtung nach Anspruch 1 oder 2, **dadurch gekennzeichnet, dass** die Lagerungseinrichtung (11) als Gelenkeinrichtung oder als Deformationsteil/-baugruppe ausgebildet ist.

4. Vorrichtung nach einem der vorangegangenen Ansprüche, **dadurch gekennzeichnet, dass** die Kopplungseinrichtung (14) mit dem Aggregat (105) im Bereich einer Raumachse (x-Achse, y-Achse, z-Achse) durch einen Aggregatschwerpunkt zusammenwirkt.

5. Vorrichtung nach einem der vorangegangenen Ansprüche, **dadurch gekennzeichnet, dass** die Betätigungseinrichtung (13) in Fahrzeugquerrichtung (y) gesehen, zumindest teilweise außerhalb eines Fahrzeuglängsträgers (102/103) angeordnet ist und in diese Richtung zumindest derart weit nach außen reicht, dass im Kollisionsfall mittels der Betätigungseinrichtung (13) eine Verlagerung des Trägers (10) in y-Richtung bewirkbar ist.

6. Vorrichtung nach einem der vorangegangenen Ansprüche, **dadurch gekennzeichnet, dass** die Betätigungseinrichtung (13) endseitige Abrundungen oder Abschrägungen des Trägers (10) sind.

7. Vorrichtung nach einem der vorangegangenen Ansprüche, **dadurch gekennzeichnet, dass** die Kinematik, die Verformbarkeiten der Einzelteile, die Elastizitäten und die freien Verlagerungswege der Vorrichtung und des Aggregats (105) derart ausgelegt sind, dass bei gegebenen Anforderungen eines teilüberdeckten Aufpralltests das Aggregat (105) auf einer der Aufprallseite abgewandten Seite mit einer Karosseriestruktur des Fahrzeugs (1) in Kontakt gelangt.

8. Vorrichtung nach einem der vorangegangenen Ansprüche, **dadurch gekennzeichnet, dass** die Vorrichtung (2) im Bereich der Front oder eines Hecks eines Fahrzeugs (1) angeordnet ist.

## Claims

1. Device for producing an impulse on a vehicle (1) in a transverse vehicle direction (y) resulting from energy which is released in the event of an offset impact of the vehicle (1) against an obstacle (106), having:
- at least one carrier (10) which extends in the transverse vehicle direction (y) and which is constructed in a rigid manner,
- at least one bearing device (11) for securing the carrier (10) in a rest position to an auxiliary frame (12) or a bodywork structure of the vehicle (1),
- at least one actuation device (13) for displacing the carrier (10) in the event of an accident substantially in the transverse vehicle direction (y), and
- at least one coupling device (14, 15) which at least in the event of the displacement of the carrier (10) in the transverse vehicle direction (y) cooperates or moves into operational connection with a unit (105) and redirects the unit (105) at least in the region of the operational connection in the transverse vehicle direction (y) relative to the bodywork of the vehicle, **characterised in that** the coupling device (14, 15) during normal operation of the vehicle (1) supports the unit (105) in the z direction and the carrier (10) thus acts as a transverse torque carrier in order to support torques about the transverse vehicle axis (y axis).

2. Device according to claim 1, **characterised in that** the bearing device (11) is constructed so as to hinge about a vertical vehicle axis (z axis) or is constructed so as to be more deformable about the vertical vehicle axis (z axis) than about the remaining vehicle axes (x axis, y axis).

3. Device according to claim 1 or claim 2, **characterised in that** the bearing device (11) is constructed as an articulation device or as a deformation component/subassembly.

4. Device according to any one of the preceding claims, **characterised in that** the coupling device (14) cooperates with the unit (105) in the region of a spatial axis (x axis, y axis, z axis) by means of a centre of gravity of the unit.

5. Device according to any one of the preceding claims, **characterised in that** the actuation device (13), when viewed in the transverse vehicle direction (y), is arranged at least partially outside a longitudinal vehicle carrier (102/103) and extends at least so far outwards in this direction that a displacement of the carrier (10) can be brought about in the y direction in the event of a collision by means of the actuation device (13).

6. Device according to any one of the preceding claims, **characterised in that** the actuation device (13) are end-side rounded portions or chamfers of the carrier (10).

7. Device according to any one of the preceding claims, **characterised in that** the kinematics, the occurrences of deformation of the individual components, the resilience levels and the free displacement paths of the device and the unit (105) are configured in such a manner that, with the specific demands of an oblique impact test, the unit (105) comes into contact with a bodywork structure of the vehicle (1) at a side facing away from the impact side.

8. Device according to any one of the preceding claims, **characterised in that** the device (2) is arranged in the region of the front or a rear of a vehicle (1).

## Revendications

1. Dispositif pour produire une impulsion sur un véhicule (1) dans une direction transversale de véhicule (y) résultant d'une énergie libérée lors d'un choc désaxé du véhicule (1) contre un obstacle (106), présentant :
- au moins un support (10) réalisé de manière à résister à la compression et s'étendant dans la direction transversale de véhicule (y),
- au moins un système de logement (11) servant à fixer le support (10) dans une position de repos au niveau d'un faux-châssis (12) ou d'une structure de carrosserie du véhicule (1),
- au moins un système d'actionnement (13) servant à déplacer le support (10) sensiblement dans la direction transversale de véhicule (y) en cas d'accident, et
- au moins un système de couplage (14, 15), qui, au moins dans le cas du déplacement du support (10) dans la direction transversale de véhicule (y), coopère ou entre en liaison active avec un groupe (105) et dévie le groupe (105) au moins dans la zone de la liaison active dans la direction transversale de véhicule (y) par rapport à la carrosserie du véhicule, **caractérisé en ce que** le système de couplage (14, 15) soutient, lors du fonctionnement normal du véhicule (1), le groupe (105) dans la direction z, et le support (10) fait ainsi office de traverse de couple de rotation servant à soutenir des couples autour de l'axe transversal de véhicule (axe y).

2. Dispositif selon la revendication 1, **caractérisé en ce que** le système de logement (11) est réalisé de manière articulée sous la forme d'une charnière autour d'un axe vertical de véhicule (axe z) ou est réalisé de manière plus facilement déformable autour de l'axe vertical de véhicule (axe z) qu'autour des autres axes de véhicule (axe x, axe y).

3. Dispositif selon la revendication 1 ou 2, **caractérisé en ce que** le système de logement (11) est réalisé sous la forme d'un système articulé ou sous la forme d'une pièce/d'un module de déformation.

4. Dispositif selon l'une quelconque des revendications précédentes, **caractérisé en ce que** le système de couplage (14) coopère avec le groupe (105) dans la zone d'un axe dans l'espace (axe x, axe y, axe z) via un centre de gravité de groupe.

5. Dispositif selon l'une quelconque des revendications précédentes, **caractérisé en ce que** le système d'actionnement (13) est disposé, vu dans la direction transversale de véhicule (y), au moins en partie en dehors d'un longeron de véhicule (102/103) et va au moins si loin vers l'extérieur dans cette direction qu'en cas de collision, un déplacement du support (10) dans la direction y peut être provoqué au moyen du système d'actionnement (13).

6. Dispositif selon l'une quelconque des revendications précédentes, **caractérisé en ce que** le système d'actionnement (13) sont formé par des arrondis ou des biseaux, situés côté extrémité, du support (10).

7. Dispositif selon l'une quelconque des revendications précédentes, **caractérisé en ce que** la cinématique, les possibilités de déformation des différentes pièces, les élasticités et la liberté de déplacement du dispositif et du groupe (105) sont configurées de telle manière que, pour des exigences données d'un test de choc avec recouvrement partiel, le groupe (105) sur un côté éloigné du côté du choc arrive en contact avec une structure de carrosserie du véhicule (1).

8. Dispositif selon l'une quelconque des revendications précédentes, **caractérisé en ce que** le dispositif (2) est disposé dans la zone de l'avant ou de l'arrière d'un véhicule (1).
